# EUROPEAN PATENT APPLICATION

(11) **EP 3 407 634 A1**
(43) Date of publication of application: **28.11.2018**
(21) Application number: 16899716.1
(22) Date of filing: 25.04.2016
(51) Int. Cl.: H04W 12/04

(54) **DATA TRANSMISSION METHOD AND DEVICE**

(71) Applicant: Guangdong Oppo Mobile Telecommunications Corp., Ltd., Dongguan, Guangdong 523860 (CN)
(72) Inventor: TANG, Hai, Dongguan Guangdong 523860 (CN)
(74) Representative: Manitz Finsterwald Patentanwälte PartmbB
(86) International application number: PCT/CN2016/080121
(87) International publication number: WO 2017/185201

(57) **Abstract**

Provided in the embodiments of the present invention are a data transmission method and device, able to achieve higher order MIMO transmission without adding terminal antennae, and able to achieve the uplink transmission speed required for 5G. The method comprises: a first terminal determines first time frequency resources, a first transmission format, second time frequency resources, and a second transmission format; using the first transmission format and over the first time frequency resources, the first terminal sends to a second terminal first data amongst data to be sent, in order for the second terminal to send the first data to a network device, the data to be sent being data to be sent to the network device; and using the second transmission format and over the second time frequency resources, the first terminal sends to the network device second data amongst the data to be sent.

## Description

### TECHNICAL FIELD

The present application relates to communications, and more particular, to a data transmission method and device.

### BACKGROUND

An Enhanced Long Term Evolution-Advanced (LTE-A) Revision 10 (RIO) may support Uplink (UL) 4-stream Multiple-Input Multiple-Output (MIMO) and Multi-User MIMO (MU-MIMO), and may achieve peak spectral efficiency of 7.5bps/Hz. However, due to the size limitations of a terminal such as a mobile phone, it is quite difficult to place four antennas at the terminal. A 5G-based multimedia broadband technology is required to achieve peak spectrum efficiency of Downlink (DL) 30bps/Hz and UL 15bps/Hz. That is, it is necessary to support UL 8-stream MIMO transmission and it is necessary to increase the number of terminal transmission antennas to be more than 8, which is impossible for conventional mobile phone terminals. Laptops are also hard to support.

### SUMMARY

The embodiment of the present application provides a data transmission method and device, which are able to achieve higher-order MIMO transmission without adding terminal antennas, and able to achieve a UL transmission rate required for 5G.

A first aspect provides a data transmission method. The method includes that a first terminal determines a first time frequency resource, a first transmission format, a second time frequency resource, and a second transmission format; the first terminal sends first data in data to be sent to a second terminal over the first time frequency resource using the first transmission format, in order for the second terminal to send the first data to a network device, the data to be sent being data to be sent to the network device. The first terminal sends second data in the data to be sent to the network device over the second time frequency resource using the second transmission format.

With reference to the first aspect, in a first possible implementation manner of the first aspect, the second time frequency resource is the same as a time frequency resource over which the second terminal sends the first data to the network device.

With reference to the first aspect or any one of the foregoing possible implementation manners, in a second possible implementation manner of the first aspect, before a first terminal determines a first time frequency resource, a first transmission format, a second time frequency resource, and a second transmission format, the method further includes that the first terminal receives at least one of first information or second information sent by the network device. The first information includes at least one of the first time frequency resource or the first transmission format, and the second information includes at least one of the second time frequency resource or the second transmission format.

With reference to the first aspect or any one of the foregoing possible implementation manners, in a third possible implementation manner of the first aspect, the first information and the second information are carried in the same message. Alternatively, the first information and the second information are carried in different messages, at least one message in the different messages being configured to indicate an association relationship between the first information and the second information.

With reference to the first aspect or any one of the foregoing possible implementation manners, in a fourth possible implementation manner of the first aspect, before receiving at least one of first information or second information sent by the network device, the method further includes that the first terminal sends a notification message to the network device, the notification message including an identifier of at least one terminal, the at least one terminal being a terminal directly communicating with the first terminal.

With reference to the first aspect or any one of the foregoing possible implementation manners, in a fifth possible implementation manner of the first aspect, the notification message further includes capability information of the at least one terminal.

With reference to the first aspect or any one of the foregoing possible implementation manners, in a sixth possible implementation manner of the first aspect, the capability information includes at least one of a transmission bandwidth or an antenna quantity.

With reference to the first aspect or any one of the foregoing possible implementation manners, in a seventh possible implementation manner of the first aspect, the step that the first terminal sends a notification message to the network device includes that the first terminal periodically sends the notification message to the network device.

With reference to the first aspect or any one of the foregoing possible implementation manners, in an eighth possible implementation manner of the first aspect, before receiving at least one of first information or second information sent by the network device, the method further includes that the first terminal receives a first Sounding Reference Signal (SRS) request sent by the network device; and the first terminal sends a first SRS to the network device.

With reference to the first aspect or any one of the foregoing possible implementation manners, in a ninth possible implementation manner of the first aspect, before a first terminal determines a first time frequency resource, a first transmission format, a second time frequency resource, and a second transmission format, the method further includes that the first terminal periodically sends a second SRS to at least one terminal, the at least one terminal being a terminal directly communicating with the first terminal.

With reference to the first aspect or any one of the foregoing possible implementation manners, in a tenth possible implementation manner of the first aspect, the first transmission format includes a Modulation and Coding Scheme (MCS) of one or more Transport Blocks (TBs), a pre-coding vector, a Redundancy Version (RV), and indication information for transmitting new data or retransmitting data; and the second transmission format includes an MCS of one or more TBs, a pre-coding vector, an RV, and indication information for transmitting new data or retransmitting data.

A second aspect provides a data transmission method. The method includes that a second terminal determines a first time frequency resource and a first transmission format. The second terminal acquires first data in data to be sent from a first terminal over the first time frequency resource using the first transmission format, the data to be sent being data to be sent to a network device, the data to be sent further including second data, the second data being sent to the network device by the first terminal. When the first data is acquired, the second terminal determines a third time frequency resource and a third transmission format; and the second terminal sends the first data to the network device over the third time frequency resource using the third transmission format.

With reference to the second aspect, in a first possible implementation manner of the second aspect, the third time frequency resource is the same as a time frequency resource over which the first terminal sends the second data to the network device.

With reference to the second aspect or any one of the foregoing possible implementation manners, in a second possible implementation manner of the second aspect, before a second terminal determines a first time frequency resource and a first transmission format, the method further includes that the second terminal receives at least one of first information or third information sent by the network device, the first information including at least one of the first time frequency resource or the first transmission format, the third information including at least one of the third time frequency resource or the third transmission format.

With reference to the second aspect or any one of the foregoing possible implementation manners, in a third possible implementation manner of the second aspect, the first information and the third information are carried in the same message. Alternatively, the first information and the third information are carried in different messages, at least one message in the different messages being configured to indicate an association relationship between the first information and the third information.

With reference to the second aspect or any one of the foregoing possible implementation manners, in a fourth possible implementation manner of the second aspect, before receiving at least one of first information or third information sent by the network device, the method further includes that the second terminal receives a second SRS sent by the first terminal. The second terminal determines second Channel State Information (CSI) based on the second SRS, the second CSI being configured to indicate state information of a channel for data transmission from the first terminal to the second terminal The second terminal receives a second CSI request sent by the network device; and the second terminal sends the second CSI to the network device.

With reference to the second aspect or any one of the foregoing possible implementation manners, in a fifth possible implementation manner of the second aspect, before receiving at least one of first information and third information sent by the network device, the method further includes that: the second terminal receives a third SRS request sent by the network device; and the second terminal sends a third SRS to the network device.

With reference to the second aspect or any one of the foregoing possible implementation manners, in a sixth possible implementation manner of the second aspect, the method further includes that when the first data is not acquired, the second terminal sends UL feedback information to the network device for indicating that the second terminal fails to acquire the first data. When the first data is not acquired, the second terminal sends other UL data to the network device using the third time frequency resource and the third transmission format.

With reference to the second aspect or any one of the foregoing possible implementation manners, in a seventh possible implementation manner of the second aspect, the first transmission format includes an MCS of one or more TBs, a pre-coding vector, an RV, and indication information for transmitting new data or retransmitting data; and the third transmission format includes an MCS of one or more TBs, a pre-coding vector, an RV, and indication information for transmitting new data or retransmitting data.

A third aspect provides a data transmission method. The method includes that: a network device determines at least one of first information, second information or third information, the first information including at least one of a first time frequency resource or a first transmission format, the first time frequency resource and the first transmission format being configured for a first terminal to send first data in data to be sent to a second terminal, the data to be sent being data to be sent to the network device, the second information including at least one of a second time frequency resource or a second transmission format, the second time frequency resource and the second transmission format being configured for the first terminal to send second data in the data to be sent to the network device, the third information including at least one of a third time frequency resource or a third transmission format, the third time frequency resource and the third transmission format being configured for the second terminal to send the first data to the network device; and the network device sends the at least one information.

With reference to the third aspect, in a first possible implementation manner of the third aspect, the second time frequency resource and the third time frequency resource are the same time frequency resource.

With reference to the third aspect or any one of the foregoing possible implementation manners, in a second possible implementation manner of the third aspect, when the at least one information includes the first information and the second information, the step that the network device sends the at least one information includes that the network device sends the first information and the second information, carried in the same message, to the first terminal. Alternatively, the network device sends the first information and the second information, carried in different messages, to the first terminal, at least one message in the different messages being configured to indicate an association relationship between the first information and the second information.

With reference to the third aspect or any one of the foregoing possible implementation manners, in a third possible implementation manner of the third aspect, when the at least one information includes the first information and the third information, the step that the network device sends the at least one information includes that the network device sends the first information and the third information, carried in the same message, to the second terminal. Alternatively, the network device sends the first information and the third information, carried in different messages, to the second terminal, at least one message in the different messages being configured to indicate an association relationship between the first information and the third information.

With reference to the third aspect or any one of the foregoing possible implementation manners, in a fourth possible implementation manner of the third aspect, before determining at least one of first information, second information and third information, the method further includes that: the network device receives a notification message sent by the first terminal, the notification message including an identifier of at least one terminal, the at least one terminal being a terminal directly communicating with the first terminal; and the network device determines the second terminal from the at least one terminal.

With reference to the third aspect or any one of the foregoing possible implementation manners, in a fifth possible implementation manner of the third aspect, the notification message further includes capability information of the at least one terminal.

With reference to the third aspect or any one of the foregoing possible implementation manners, in a sixth possible implementation manner of the third aspect, the capability information includes at least one of a transmission bandwidth and an antenna quantity.

With reference to the third aspect or any one of the foregoing possible implementation manners, in a seventh possible implementation manner of the third aspect, the step that the network device receives a notification message sent by the first terminal includes that the network device receives the notification message periodically sent by the first terminal.

With reference to the third aspect or any one of the foregoing possible implementation manners, in an eighth possible implementation manner of the third aspect, the step that the network device determines the second terminal from the at least one terminal includes that the second terminal is determined based on at least one of first CSI, second CSI, third CSI or capability information of at least one terminal. The first CSI is state information of a UL channel between the first terminal and the network device, the second CSI is state information of a channel for data transmission between the first terminal and a terminal in at least one terminal, and the third CSI is state information of a UL channel between the terminal in the at least one terminal and the network device.

With reference to the third aspect or any one of the foregoing possible implementation manners, in a ninth possible implementation manner of the third aspect, the step that at least one of first information, second information or third information is determined includes that the first information, the second information and the third information are determined based on first CSI, second CSI corresponding to the second terminal and third CSI corresponding to the second terminal, or based on first CSI, second CSI corresponding to the second terminal, third CSI corresponding to the second terminal and capability information of the second terminal. The first CSI is state information of a UL channel between the first terminal and the network device, the second CSI corresponding to the second terminal is state information of a channel for data transmission from the first terminal to the second terminal, and the third CSI corresponding to the second terminal is state information of a UL channel between the second terminal and the network device.

With reference to the third aspect or any one of the foregoing possible implementation manners, in a tenth possible implementation manner of the third aspect, before determining at least one of first information, second information or third information, the method further includes that the network device sends a first SRS request to the first terminal. The network device receives a first SRS sent by the first terminal. The network device acquires first CSI based on the first SRS, the first CSI being state information of a UL channel between the first terminal and the network device.

With reference to the third aspect or any one of the foregoing possible implementation manners, in an eleventh possible implementation manner of the third aspect, the first SRS request is configured for requesting the first terminal to send the first SRS at first time, the first time including at least one sending time point.

With reference to the third aspect or any one of the foregoing possible implementation manners, in a twelfth possible implementation manner of the third aspect, before determining at least one of first information, second information or third information, the method further includes that: the network device sends a CSI request to at least one terminal, the at least one terminal being a terminal directly communicating with the first terminal. The network terminal receives second CSI sent by each of the at least one terminal, the second CSI being state information of a channel for data transmission from the first terminal to a terminal in the at least one terminal.

With reference to the third aspect or any one of the foregoing possible implementation manners, in a thirteenth possible implementation manner of the third aspect, before determining at least one of first information, second information or third information, the method further includes that the network device sends a third SRS request to at least one terminal, the at least one terminal being a terminal directly communicating with the first terminal. The network device receives a third SRS sent by each of the at least one terminal. The network device acquires third CSI based on the third SRS, the third CSI being state information of a UL channel between the terminal in the at least one terminal and the network device.

With reference to the third aspect or any one of the foregoing possible implementation manners, in a fourteenth possible implementation manner of the third aspect, the third SRS request is configured for requesting the at least one terminal to send the third SRS at first time, the first time including at least one sending time point.

With reference to the third aspect or any one of the foregoing possible implementation manners, in a fifteenth possible implementation manner of the third aspect, the first transmission format includes an MCS of one or more TBs, a pre-coding vector, an RV, and indication information for transmitting new data or retransmitting data; the second transmission format includes an MCS of one or more TBs, a pre-coding vector, an RV, and indication information for transmitting new data or retransmitting data; and the third transmission format includes an MCS of one or more TBs, a pre-coding vector, an RV, and indication information for transmitting new data or retransmitting data.

A fourth aspect provides a terminal for performing the method in the first aspect or any alternative implementation manners of the first aspect. Specifically, the terminal includes a module unit for performing the method in the first aspect or any possible implementation manners of the first aspect.

A fifth aspect provides a terminal for performing the method in the second aspect or any alternative implementation manners of the second aspect. Specifically, the terminal includes a module unit for performing the method in the second aspect or any possible implementation manners of the second aspect.

A sixth aspect provides a network terminal for performing the method in the third aspect or any alternative implementation manners of the third aspect. Specifically, the network device includes a module unit for performing the method in the third aspect or any possible implementation manners of the third aspect.

A seventh aspect provides a terminal, including a memory and a processor, the memory being configured to store an instruction, the processor being configured to execute the instruction stored in the memory. When the processor executes the instruction stored in the memory, the processor is enabled to perform the method in the first aspect or any alternative implementation manners of the first aspect.

An eighth aspect provides a terminal, including a memory and a processor, the memory being configured to store an instruction, the processor being configured to execute the instruction stored in the memory. When the processor executes the instruction stored in the memory, the processor is enabled to perform the method in the second aspect or any alternative implementation manners of the second aspect.

A ninth aspect provides a network device, including a memory and a processor, the memory being configured to store an instruction, the processor being configured to execute the instruction stored in the memory. When the processor executes the instruction stored in the memory, the processor is enabled to perform the method in the third aspect or any alternative implementation manners of the third aspect.

A tenth aspect provides a computer storage medium having a program code stored therein, the program code being configured for performing the method in the first aspect or any alternative implementation manners of the first aspect.

An eleventh aspect provides a computer storage medium having a program code stored therein, the program code being configured for performing the method in the second aspect or any alternative implementation manners of the second aspect.

A twelfth aspect provides a computer storage medium having a program code stored therein, the program code being configured for performing the method in the third aspect or any alternative implementation manners of the third aspect.

Therefore, in the embodiments of the present application, a first terminal sends a part of data to be sent to a second terminal in a Device to Device (D2D) transmission manner, and the first terminal and the second terminal separately send data in the data to be sent. Thus, the first terminal and the second terminal may be regarded as a unified array of antennas for collaboratively sending data. The effect of higher-order MIMO transmission may be achieved without adding terminal antennas, and a UL transmission rate required for 5G may be achieved.

### BRIEF DESCRIPTION OF DRAWINGS

In order to describe the technical solutions in the embodiments of the present application more clearly, the drawings required to be used in descriptions about the embodiments or the conventional art will be simply introduced below. Apparently, the drawings in the following descriptions are only some embodiments of the present application. Those of ordinary skilled in the art may further obtain other drawings according to these drawings without creative work.
FIG. 1 is a schematic flowchart of a data transmission method according to an embodiment of the present application.
FIG. 2 is a diagram of an application scenario according to an embodiment of the present application.
FIG. 3 is a schematic flowchart of a data transmission method according to an embodiment of the present application.
FIG. 4 is a diagram of a communication system according to an embodiment of the present application.
FIG. 5 is a schematic flowchart of a data transmission method according to an embodiment of the present application.
FIG. 6 is a schematic block diagram of a terminal according to an embodiment of the present application.
FIG. 7 is a schematic block diagram of a terminal according to an embodiment of the present application.
FIG. 8 is a schematic block diagram of a network device according to an embodiment of the present application.
FIG. 9 is a schematic block diagram of a data transmission device according to an embodiment of the present application.

### DETAILED DESCRIPTION

The technical solutions in the embodiments of the present application are clearly and completely described as below with reference to the accompanying drawings in the embodiments of the invention. It is apparent that the described embodiments are a part of the embodiments of the present application, but not all of the embodiments. All other embodiments obtained by those skilled in the art based on the embodiments of the present application without creative efforts fall within the scope of protection of the present application.

The technical solutions in the embodiments of the present application are clearly and completely described as below with reference to the accompanying drawings in the embodiments of the present application. It is apparent that the described embodiments are a part of the embodiments of the present application, but not all of the embodiments. All other embodiments obtained by those skilled in the art based on the embodiments of the present application without creative efforts fall within the scope of protection of the present application.

The terms "component", "module", "system" or the like, as used in this specification, are configured to mean a computer-related entity, hardware, firmware, combination of hardware and software, software, or software in execution. For example, a component may be, but is not limited to, a process running on a processor, a processor, an object, an executable file, an execution thread, a program, and/or a computer. By way of illustration, both an application running on a computing device and a computing device may be a component. One or more components may reside in a process and/or execution thread, and the component may be located on one computer and/or distributed between two or more computers. Moreover, these components may be executed from various computer-readable media having various data structures stored thereon. The components may, for example, communicate through local and/or remote processes according to a signal having one or more data packets (e.g., data from two components interacting with another component between a local system, a distributed system, and/or a network, such as the Internet interacting with other systems through a signal).

The technical solution of the present application may be applied to various communication systems, such as: a Global System of Mobile communication (GSM), a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a Universal Mobile Telecommunication System (UMTS), 5G, etc.

In the embodiment of the present application, direct communication may be referred to as D2D communication. The D2D communication may be applied to wearable devices, for example, an interconnection between a mobile phone of a user and a device such as a smart wristband, watch and glasses worn by the user. The D2D communication may refer to Vehicle to Vehicle (V2V) communication or V2X communication. In the V2X communication, X may refer to any device with wireless receiving and sending capabilities, such as, but not limited to, a slow moving wireless apparatus, a fast moving in-vehicle device, or a network control node with wireless transmitting and receiving capabilities. The D2D communication may include unicast D2D communication.

The present application incorporates various embodiments of a terminal and a network device. The terminal may also be called an access terminal, a user unit, a user station, a mobile radio station, a mobile station, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device having a wireless communication function, a computing device or other processing devices connected to a wireless modem, an in-vehicle device, a wearable device, and a terminal device in a future 5G network. The network device may be configured to communicate with a mobile device, and the network device may be a GSM or a Base Transceiver Station (BTS) in CDMA, or may be a NodeB (NB) in WCDMA, or an Evolutional Node B (eNB or eNodeB) in LTE, or a relay station or an access point, or an in-vehicle device, a wearable device, and a network device in a future 5G network.

In the embodiment of the present application, the connection between the terminal and the network device may be referred to as a Uu connection, and the connection between the terminal and the terminal may be referred to as a Sidelink (SL) connection, or a D2D connection.

Furthermore, various aspects or features of the present application may be implemented as a method, apparatus, or article of manufacture using standard programming and/or engineering technologies. The term "article of manufacture" as used in the present application encompasses a computer program accessible from any computer-readable device, carrier, or medium. For example, the computer-readable medium may include, but is not limited to, a magnetic storage device (such as a hard disk, a floppy disk, or a magnetic tape), an optical disk (such as a Compact Disk (CD) and a Digital Versatile Disk (DVD)), a smart card and a flash memory device (such as an Erasable Programmable Read-Only Memory (EPROM), a card, a stick or a key driver). Additionally, various storage media described herein may represent one or more devices and/or other machine-readable media for storing information. The term "machine-readable medium" may include, but is not limited to, a wireless channel and various other mediums capable of storing, containing, and/or carrying instructions and/or data.

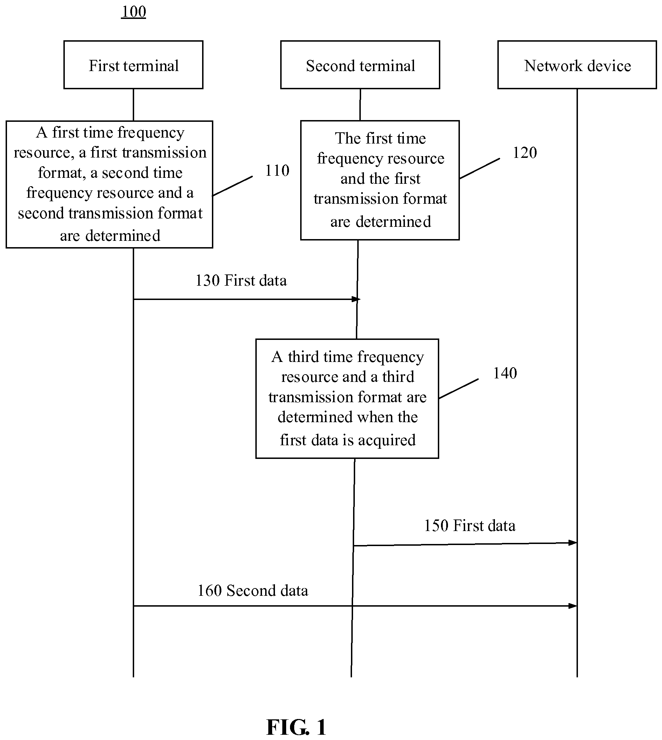

FIG. 1 is a schematic flowchart of a data transmission method 100 according to an embodiment of the present application. As shown in FIG. 1, the method 100 includes the operations as follows.

In 110, a first terminal determines a first time frequency resource, a first transmission format, a second time frequency resource, and a second transmission format.

In 120, a second terminal determines the first time frequency resource and the first transmission format.

In 130, the first terminal sends first data in data to be sent to the second terminal over the first time frequency resource using the first transmission format, the data to be sent being data to be sent to a network device, the data to be sent including the first data and second data. The second terminal acquires the first data in the data to be sent from the first terminal over the first time frequency resource using the first transmission format.

In 140, the second terminal determines a third time frequency resource and a third transmission format when the second terminal acquires the first data.

In 150, the second terminal sends the first data to the network device over the third time frequency resource using the third transmission format.

In 160, the first terminal sends the second data in the data to be sent to the network device over the second time frequency resource using the second transmission format.

Therefore, in the embodiment of the present application, a first terminal sends a part of data to be sent to a second terminal in a D2D transmission manner, and the first terminal and the second terminal separately send data in the data to be sent. Thus, the first terminal and the second terminal may be regarded as a unified array of antennas for collaboratively sending data. The effect of higher-order MIMO transmission may be achieved without adding terminal antennas, and a UL transmission rate required for 5G may be achieved.

It should be understood that the size of the serial number in the embodiment described in various drawings of the present application should not limit the order of execution, and the order of execution of each process should be determined by actual conditions. For example, for the method 100 shown in FIG. 1, the first data and the second data may be simultaneously sent to the network device. For another example, in 110, the time of determining the first time frequency resource and the first transmission format and the time of determining the second time frequency resource and the second transmission format may be ahead of 130 and 150, respectively.

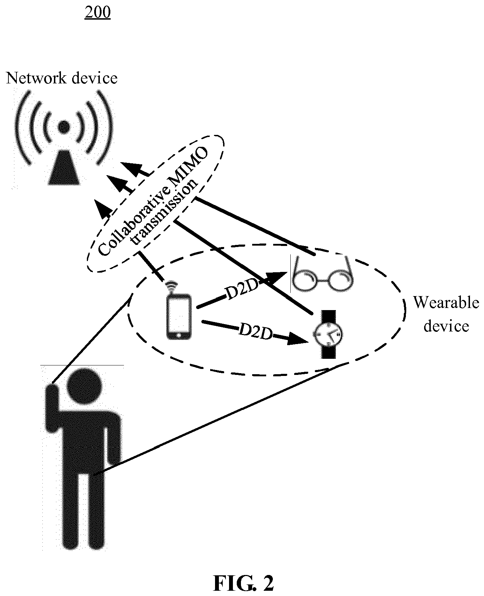

The embodiment of the present application may be applied to a scenario of a wearable device. For example, in a communication scenario 200 shown in FIG. 2, respective wearable devices may establish a D2D connection, and respective wearable devices may perform collaborative MIMO transmission to transmit data to the network device. In FIG. 2, a mobile phone is used as a first terminal, and glasses and a watch are used as second terminals. Of course, the glasses or the watch may also be used as the first terminal, and the mobile phone is used as the second terminal.

Alternatively, in the embodiment of the present application, when the second terminal fails to acquire the first data (for example, the first data is not successfully decoded), the second terminal may send UL feedback information to a base station to indicate that the second terminal fails to acquire the first data. Herein, a resource that sends the UL feedback information may be allocated by the base station.

Alternatively, when the second terminal fails to acquire the first data, the second terminal may send other UL data using the third time frequency resource and the third transmission format. The second base station may also notify the base station by using UL feedback information, and the second terminal sends other UL data.

Alternatively, the second terminal may further send data decoding feedback information to the first terminal. For example, if the decoding succeeds, Acknowledge (ACK) may be fed back. If the decoding fails, Non-acknowledge (NACK) may be fed back.

Alternatively, in the embodiment of the present application, the second time frequency resource and the third time frequency resource are the same transmission resource, which may further improve transmission efficiency.

Alternatively, in the embodiment of the present application, the first terminal and/or the second terminal may be scheduled by the network device, so that the first terminal and the second terminal collaboratively send data.

Specifically, the network device determines at least one of first information, second information or third information. The first information includes at least one of a first time frequency resource or a first transmission format. The second information includes at least one of a second time frequency resource or a second transmission format. The third information includes at least one of a third time frequency resource or a third transmission format. The network device sends the at least one information.

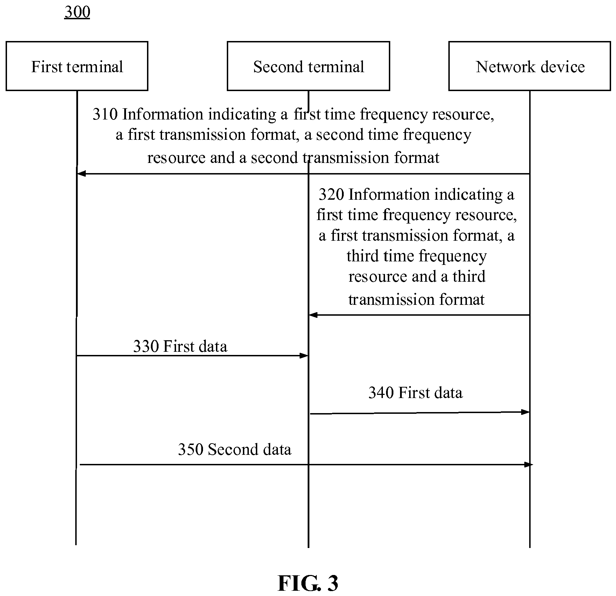

For example, in the data transmission method 300 shown in FIG. 3, in 310, the network device sends, to the first terminal, information indicating the first time frequency resource, the second time frequency resource, the first transmission format, and the second transmission format. The information indicating the first time frequency resource and the first transmission format and the information indicating the second time frequency resource and the second transmission format may be carried in the same message or carried in different messages. At least one of the different messages carries inter-related information. In 320, the network device sends, to the second terminal, information indicating the first time frequency resource and the first transmission format and information indicating the third time frequency resource and the third transmission format. The information indicating the first time frequency resource and the first transmission format and the information indicating the third time frequency resource and the third transmission format may be carried in the same message, or carried in different messages. At least one of the different messages carries inter-related information. In 330, the first terminal sends the first data to the second terminal using the first time frequency resource and the first transmission format. In 340, the second terminal receives the data sent by the first terminal using the first time frequency resource and the first transmission format, and sends the first data to the network device using the third time frequency resource and the third transmission format. In 350, the first terminal sends the second data to the network device using the second time frequency resource and the second transmission format.

In the embodiment of the present application, the network device may allocate time frequency resources and/or determine a transmission format only for UL transmission of the first terminal. The network device may also allocate time frequency resources and/or determine a transmission format only for UL transmission of the second terminal. Alternatively, the network device may only allocate time frequency resources and/or determine a transmission format for data transmission from the first terminal to the second terminal.

Alternatively, the first transmission format includes an MCS of one or more TBs, a pre-coding vector, an RV, and indication information for transmitting new data or retransmitting data. The second transmission format includes an MCS of one or more TBs, a pre-coding vector, an RV, and indication information for transmitting new data or retransmitting data. The third transmission format includes an MCS of one or more TBs, a pre-coding vector, an RV, and indication information for transmitting new data or retransmitting data.

Alternatively, in the embodiment of the present application, when the network device sends first information and second information, the network device sends the first information and the second information, carried in the same message, to the first terminal. Or, when the network device sends first information and second information, the network device sends the first information and the second information, carried in different messages, to the first terminal, at least one message in the different messages being configured to indicate an association relationship between the first information and the second information.

Specifically, since the first information indicates a transmission resource and a transmission format for sending data to be sent to the second terminal and the second information indicates a transmission resource and a transmission format for sending data to be sent to the network device, an association relationship between the first information and the second information is required to be notified to the first terminal. The first information and the second information may be carried in the same message, so that the association relationship may be implicitly reflected. Thus, the first terminal may learn that the time frequency resource and the transmission format indicated by the first information are configured to send first data in the data to be sent to the second terminal. The time frequency resource and the transmission format indicated by the second information are configured to send second data in the data to be sent to the network device. Alternatively, the first information and the second information may be carried in different messages, and at least one message is required to explicitly indicate the association relationship.

Similarly, in the embodiment of the present application, when the network device sends first information and third information, the network device sends the first information and the third information, carried in the same message, to the second terminal. Or, when the network device sends first information and third information, the network device sends the first information and the third information, carried in different messages, to the second terminal, at least one message in the different messages being configured to indicate an association relationship between the first information and the third information.

Alternatively, in the embodiment of the present application, the first terminal may establish a D2D connection (also referred to as a sidelink connection) with at least one terminal respectively. The first terminal may send an identifier of the at least one terminal to the network device using a notification message, and the network device may select a second terminal from the at least one terminal, to assist the first terminal to send UL data to the network device. Herein, the network device may select multiple terminals to assist the first terminal to send UL data to the network device.

Herein, the notification message may further include capability information of at least one terminal that establishes a D2D connection with the first terminal, such as a terminal transmission bandwidth and/or an antenna quantity.

Alternatively, the first terminal may periodically send the notification message. If the terminal that establishes the D2D connection with the first terminal changes with time, the information of the terminal, carried in the notification message, also changes.

Alternatively, in the embodiment of the present application, the network device determines the second terminal based on at least one of first CSI, second CSI, third CSI or capability information of at least one terminal. The first CSI is state information of a UL channel between the first terminal and the network device, the second CSI is state information of a channel where the first terminal transmits data to a terminal in at least one terminal that establishes a D2D connection with the first terminal, and the third CSI is state information of a UL channel between the terminal in the at least one terminal and the network device.

For example, the network device may determine a terminal having stronger capability, and/or a terminal having a better channel state with the network device, and/or a terminal having a better channel state with the first terminal as the second terminal.

For example, the network device may determine, based on a channel state between the first terminal and the network device, the amount of data that can be transmitted by the first terminal and the network device, the second terminal is selected based on the amount of the remaining data and according to third CSI, second CSI and capability information of the terminal.

Alternatively, in the embodiment of the present application, the network device may determine the first information, the second information and the third information based on first CSI, second CSI corresponding to the second terminal and third CSI corresponding to the second terminal, or based on first CSI, second CSI corresponding to the second terminal, third CSI corresponding to the second terminal and capability information of the second terminal. The third CSI corresponding to the second terminal is state information of a UL channel between the second terminal and the network device, and the second CSI corresponding to the second terminal is state information of a channel for data transmission from the first terminal to the second terminal.

For example, the network device may comprehensively evaluate characteristics of each transmission channel and allocate transmission formats and time frequency resources by referring to the first CSI, the second CSI and the third CSI.

For example, the network device may determine, based on a channel state between the first terminal and the network device, the amount of data that can be transmitted by the first terminal and the network device. If the second terminal includes multiple terminals, the amount of data that is required to be transmitted by each second terminal may be determined according to a channel state between each second terminal and the first terminal and a channel state of a UL channel between each second terminal and the network device.

It has been described above how the network device utilizes the first CSI, and/or the second CSI and/or the third CSI for scheduling. How the network device acquires the first CSI, the second CSI and the third CSI will be described below.

In the embodiment of the present application, the network device may send a first SRS request to the first terminal. After receiving the first SRS request, the first terminal sends a first SRS to the network device. The network device acquires the first CSI based on the first SRS.

The first terminal may send a UL resource Scheduling Request (SR) to the network device before the network device sends the first SRS request to the first terminal. The request may include an SR and a Buffer Status Report (BSR), and may report this information periodically.

In the embodiment of the present application, the first terminal may send a second SRS to at least one terminal that establishes a D2D connection with the first terminal. Each of the at least one terminal determines the second CSI based on the second SRS. After receiving a notification message that is sent by the first terminal and carries the identifier of the at least one terminal, the network device may send a second CSI request to the at least one terminal. Each of the at least one terminal sends second CSI to the network device.

The first terminal may periodically send the second SRS to at least one terminal that establishes a D2D connection with the first terminal. At least one terminal that establishes a D2D connection with the first terminal may periodically send the second CSI to the network device.

Before the network device sends the second CSI request to a certain terminal in the at least one terminal that establishes the D2D connection with the first terminal, if the terminal has not established a connection with the network, the terminal may be requested to initiate the establishment of a connection with the network.

In the embodiment of the present application, the network device may send a third SRS request to at least one terminal that establishes a D2D connection with the first terminal. After receiving the third SRS request, each of the at least one terminal may send a third SRS to the network device respectively. The network device determines third CSI corresponding to each terminal based on the third SRS sent by each terminal.

Before the network device sends the third CSI request to a certain terminal in the at least one terminal that establishes the D2D connection with the first terminal, if the terminal has not established a connection with the network, the terminal may be requested to initiate the establishment of a connection with the network.

Alternatively, a time point indicated by the third SRS request for sending the third SRS is the same as a time point indicated by the third SRS request for sending the third SRS. That is, the time when the first terminal sends an SRS to the network device is the same as the time when the terminal that establishes the D2D connection with the first terminal sends an SRS to the network device, so that the network device can better comprehensively evaluate channel correlation of various ULs.

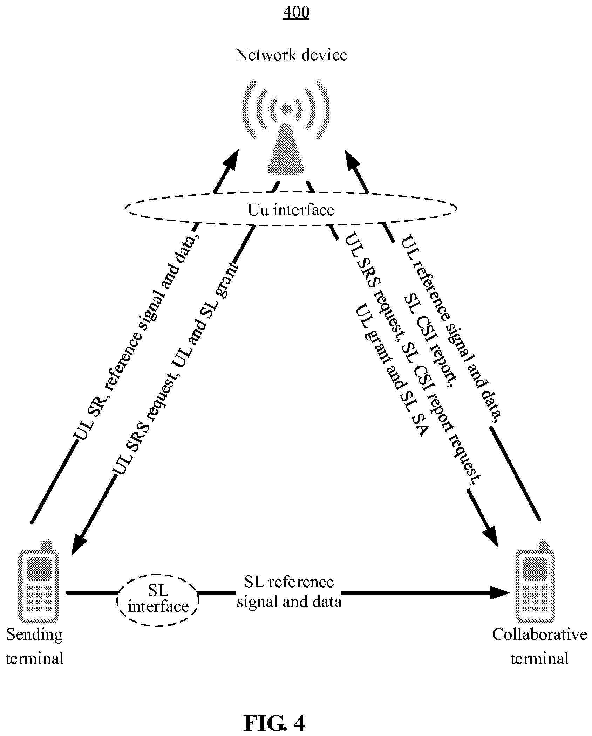

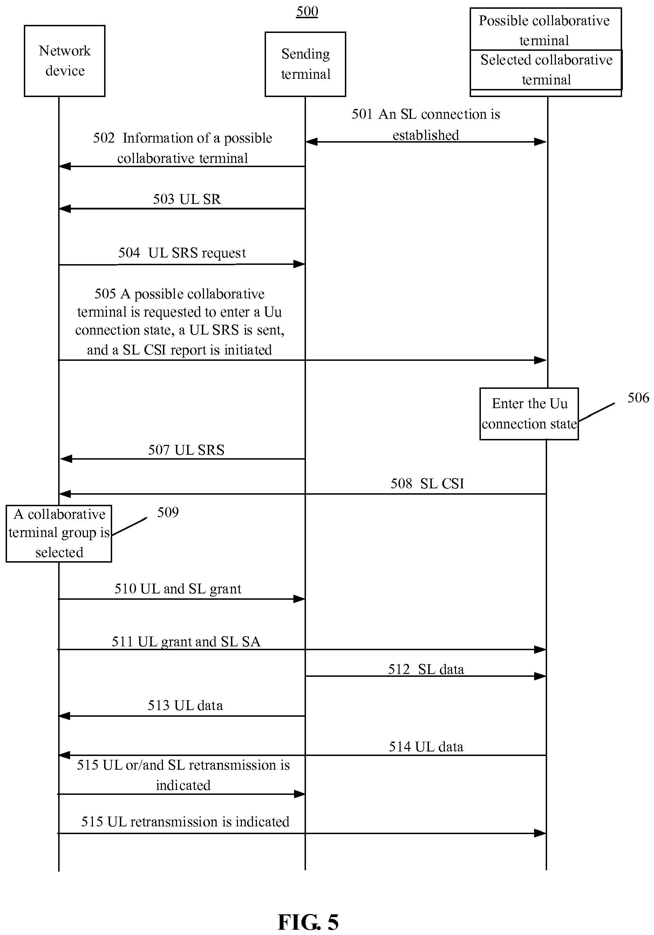

For a better understanding of the present application, the data transmission method 500 according to the embodiment of the present application will be described below with reference to FIG. 5 and the scenario 400 shown in FIG. 4.

The system shown in FIG. 4 includes a network device and multiple terminals, which communicate with each other through two air interfaces. The air interface between the network device and the terminal is a Uu interface, and a communication link from the network device to the terminal is a Uu downlink (DL), and a communication link from the terminal to the network device is a Uu UL. The air interface between the terminal and the terminal is a Sidelink (SL) air Interface.

Each terminal may send and receive a Uu signal and an SL signal. For each Uu UL data stream, a terminal that initiates a data stream is called a "sending terminal", and a terminal that assists the sending terminal to send the data stream in a collaborative MIMO mode is called a "collaborative terminal". A sending terminal may simultaneously send different SL data to multiple collaborative terminals, and collaborate with multiple collaborative terminals to send a UL data stream.

The network device may receive a UL SR, a UL SRS and an SL CSI report from the terminal. The network device may send a UL SRS request, an SL SRS request, an SL CSI report request, a UL grant, an SL grant, an SL Scheduling Assignment (SA).

The sending terminal may receive the UL SRS request, the SL SRS request, the UL Grant and the SL Grant from the network device. The sending terminal may send the UL SR, the UL SRS and the UL data to the network device, and send the SL SRS and the SL data to the collaborative terminal.

The collaborative terminal may receive the UL SRS request, the UL Grant, the SL CSI report request and the SL SA from the network device, receive the SL SRS and the SL data from the sending terminal, and send the UL SRS, the SL CSI report and the UL data to the network device.

It is assumed that the sending terminal is already in a Uu connection state with the network device, and the collaborative terminal may not be in the Uu connection state with the network device. The sending terminal may not have established a SL connection with the collaborative terminal. The sending terminal has a Uu upstream data stream to be sent to the network device.

In 501, a sending terminal and a possible collaborative terminal establish an SL connection, where the sending terminal may periodically send an SL SRS to the possible collaborative terminal, and the possible collaborative terminal may periodically feed back SL CSI to the sending terminal. The possible collaborative terminal may be a terminal that can establish an SL connection with the sending terminal.

In 502, the sending terminal sends information of the possible collaborative terminal that establishes the SL connection to a network device, and may periodically update the information (the possible collaborative terminal may change at any time). The information includes at least the identification information of the possible collaborative terminal, and the network device may identify which terminals may collaborate with the sending terminal. The information may further include capability information of the possible collaborative terminal, such as a terminal transmission bandwidth and an antenna quantity.

In 503, the sending terminal sends a UL SR to the network device, wherein the UL SR may include an SR and a BSR, and may report this information periodically (because the BSR will continuously change).

In 504, the network device sends a UL SRS request to the sending terminal.

In 505, the network device requests those possible collaborative terminals that do not establish a Uu connection with the network device to establish a Uu connection, requests a possible collaborative terminal to send a UL SRS, and requests each possible collaborative terminal to report SL CSI for the sending terminal. The information carries the identification information of the sending terminal.

Alternatively, the SRS sending time period and the time point configured by the UL SRS request are the same as the SRS sending time period and the time point configured by the UL SRS request in 504.

In 506, after receiving signaling from the network device, those possible collaborative terminals that do not establish a Uu connection with the network device establish a Uu connection with the network device.

In 507, the possible collaborative terminal sends a UL SRS, which may be sent periodically, to the network device according to the request from the network device.

In 508, the possible collaborative terminal reports SL CSI, which may be sent periodically, from the sending terminal to the possible collaborative terminal.

In 509, the network device comprehensively evaluates the link characteristics of ULs of the sending terminal and each possible collaborative terminal and SLs from the sending terminal to each possible collaborative terminal according to the UL SRS reported by the sending terminal and the possible collaborative terminals and the reported SL CSI, and selects, from the sending terminal and each possible collaborative terminal, a terminal suitable for participating in UL collaborative MIMO transmission as the collaborative terminal, wherein multiple collaborative terminals may be referred to as a collaborative terminal group.

In 510, the network device determines, according to the UL SRS reported by the sending terminal and the selected collaborative terminal and the reported SL CSI and/or the capability information of each collaborative terminal, a UL grant and an SL grant required to be sent to the sending terminal, and an SL grant and a UL grant required to be sent to the collaborative terminal.

The network device sends a UL grant and an SL grant to the sending terminal, including the SL Grant sent to each selected collaborative terminal in 509. The SL grant for each selected collaborative terminal includes the identification information of the terminal, an SL time frequency resource configured for sending data to the collaborative terminal, a transmission format, and information indicating that the SL grant is configured to send UL data of the sending terminal instead of Sidelink data.

Alternatively, the operation 510 may be implemented in two manners.

In manner one, the network device sends a downlink control signaling to the sending terminal. The downlink control signaling includes the foregoing UL grant and SL grant for each selected collaborative terminal, the UL grant and each SL grant respectively include transmission format information of one or more TBs, and the information includes at least an MCS and an RV as well as an indication indicating whether the TB is configured to transmit new data or retransmit data. The method may implicitly indicate that these SL grants are configured to send UL data of the sending terminal instead of Sidelink data.

In manner two, the network device sends multiple downlink control signalings to the sending terminal, respectively corresponding to the foregoing UL grant and SL grant for each selected collaborative terminal. Each signaling includes transmission format information of one or more TBs, and the information includes at least an MCS and an RV as well as an indication indicating whether the TB is configured to transmit new data or retransmit data. Each signaling carrying the SL grant includes information indicating that the SL grant is configured to send UL data of the sending terminal instead of Sidelink data. The method explicitly indicates that these SL grants are configured to send UL data of the sending terminal instead of Sidelink data.

Alternatively, the network device may also send indication information to the sending terminal, the indication information being configured to indicate that the collaborative terminal sends a time frequency resource of ACK or NACK to the sending terminal. The indication information may be carried in the foregoing downlink control signaling including the UL grant and/or the SL grant.

In 511, the network device sends an SL SA to the selected collaborative terminal in 509. The sending terminal sends a time frequency resource and a transmission format of SL data to the collaborative terminal, so that the collaborative terminal receives the corresponding SL data. The network device sends a UL grant to each selected collaborative terminal in 509, including time frequency resources, transmission formats or the like available to the terminal. The network device indicates, to each of the foregoing terminals, the association between the foregoing SL SA and UL grant sent to it (that is, the UL grant is configured to send data received from the SL SA, instead of being configured to send own UL data).

The UL grant for each collaborative terminal may use the same time frequency domain resource, and may be the same as the time frequency resource included in the UL grant of the sending terminal in 510.

Alternatively, 511 may be implemented in two manners.

In manner 1, the network device sends a downlink control signaling including the foregoing SL SA and UL grant to each collaborative terminal. Both the SL SA and the UL grant include transmission format information of one or more TBs, and the information includes at least an MCS and an RV as well as an indication indicating whether the TB is configured to transmit new data or retransmit data. The method may implicitly indicate that the UL grant is configured to send UL data of the sending terminal, received by the SL SA, instead of other UL data to be sent.

In manner 2, the network device sends a downlink control signaling including the foregoing SL SA to each collaborative terminal. Both the SL SA and the UL grant include transmission format information of one or more TBs, and the information includes at least an MCS and an RV as well as an indication indicating whether the TB is configured to transmit new data or retransmit data. At least one of the two signalings indicates an association relationship between the foregoing SL SA and UL grant. That is, at least one of the two signalings indicates that the UL grant is configured to send data received by the SL SA instead of other UL data to be sent.

Alternatively, the network device may also send indication information to the collaborative terminal, the indication information being configured to indicate that the collaborative terminal sends a time frequency resource of ACK or NACK to the sending terminal. The indication information may be carried in the foregoing downlink control signaling including the UL grant and/or the SL SA.

In 512, the sending terminal sends SL data to each collaborative terminal according to the SL grant in 510.

In 513, the sending terminal sends UL data using the UL grant received in 510.

In 514, each collaborative terminal sends UL data using the UL grant received in 511, the data being the SL data received in the operation 512.

If a collaborative terminal successfully decodes the SL data received from the sending terminal in 512, the terminal may use the UL grant received in 511 to send the SL data, and may feed back an SL ACK message to the sending terminal.

If a collaborative terminal fails to decode the SL data received from the sending terminal in 512, the terminal may use the UL grant received in the operation 511 to send other UL data to be sent or may not use the UL grant. Further, the terminal notify, through an uplink signaling, the network device that the SL data received according to the SL SA is not successfully decoded, and may feed back an SL NACK message to the sending terminal.

In 515, the network device may instruct the corresponding terminal to perform retransmission of the UL data according to the receiving condition of the UL data of each terminal. The network device may instruct the sending terminal to perform Sidelink retransmission according to the receiving condition of the SL distribution data from the sending terminal by each collaborative terminal. For example, when receiving the uplink signaling sent by the collaborative terminal to indicate that the decoding is not successful, or determining that the uplink data sent by the collaborative terminal is not the UL data of the sending terminal, the sending terminal may be instructed to perform retransmission.

The retransmission may be performed by the sending terminal and the collaborative terminal. The data to be retransmitted serves as overall data to be sent, or the data to be retransmitted may be sent by the sending terminal and the collaborative terminal together with other UL data as the data to be sent. During specific implementation, 510 to 515 may be re-executed.

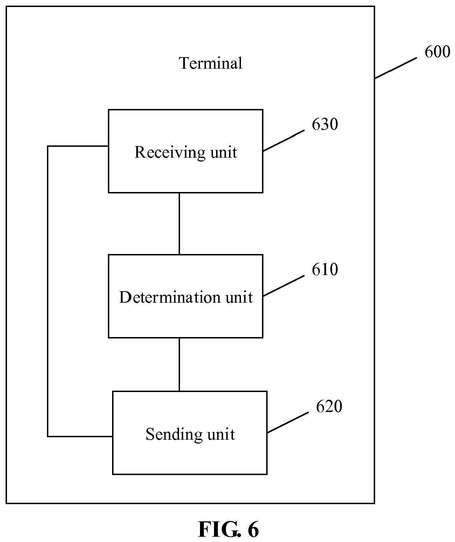

FIG. 6 is a schematic block diagram of a terminal 600 according to an embodiment of the present application. The terminal is a first terminal, which may correspond to the first terminal in the foregoing method embodiment to implement corresponding functions of the foregoing first terminal. As shown in FIG. 6, the terminal 600 includes a determination unit 610 and a sending unit 620.

The determination unit 610 is configured to determine a first time frequency resource, a first transmission format, a second time frequency resource, and a second transmission format. The sending unit 620 is configured to send first data in data to be sent to a second terminal over the first time frequency resource using the first transmission format, in order for the second terminal to send the first data to a network device, the data to be sent being data to be sent to the network device. The sending unit 620 is further configured to send second data in the data to be sent to the network device over the second time frequency resource using the second transmission format.

Alternatively, the second time frequency resource is the same as a time frequency resource over which the second terminal sends the first data to the network device.

Alternatively, as shown in FIG. 6, the terminal 600 further includes a receiving unit 630. The receiving unit 630 is configured to receive at least one of first information or second information sent by the network device, the first information including at least one of the first time frequency resource or the first transmission format, the second information including at least one of the second time frequency resource or the second transmission format.

Alternatively, the first information and the second information are carried in the same message; or, the first information and the second information are carried in different messages, at least one message in the different messages being configured to indicate an association relationship between the first information and the second information.

Alternatively, the sending unit 620 is further configured to send a notification message to the network device, the notification message including an identifier of at least one terminal, the at least one terminal being a terminal directly communicating with the first terminal.

Alternatively, the notification message further includes capability information of the at least one terminal.

Alternatively, the capability information includes at least one of a transmission bandwidth or an antenna quantity.

Alternatively, the sending unit 620 is further configured to periodically send the notification message to the network device.

Alternatively, as shown in FIG. 6, the terminal 600 further includes a receiving unit 630. The receiving unit 630 is configured to receive a first SRS request sent by the network device. The sending unit 620 is further configured to send a first SRS to the network device.

Alternatively, the sending unit 620 is further configured to periodically send a second SRS to at least one terminal, the at least one terminal being a terminal directly communicating with the first terminal.

Alternatively, the first transmission format includes an MCS of one or more TBs, a pre-coding vector, an RV, and indication information for transmitting new data or retransmitting data; and the second transmission format includes an MCS of one or more TBs, a pre-coding vector, an RV, and indication information for transmitting new data or retransmitting data.

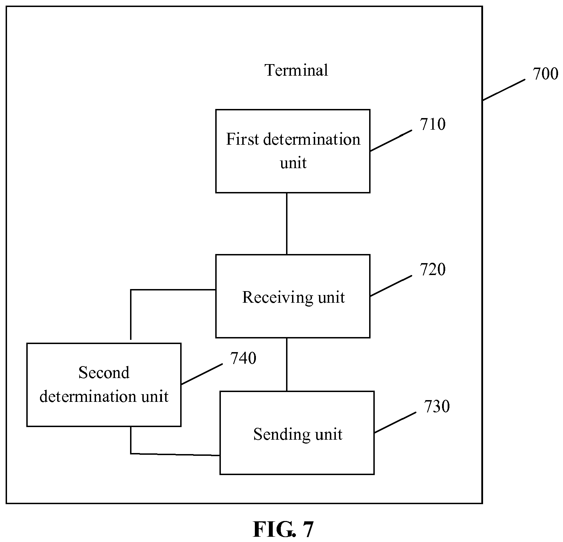

FIG. 7 is a schematic block diagram of a terminal 700 according to an embodiment of the present application. The terminal is a second terminal, which may correspond to the second terminal in the foregoing method embodiment to implement corresponding functions of the foregoing second terminal. As shown in FIG. 7, the terminal 700 includes a first determination unit 710, a receiving unit 720 and a sending unit 730.

The first determination unit 710 is configured to determine a first time frequency resource and a first transmission format. The receiving unit 720 is configured to acquire first data in data to be sent from a first terminal over the first time frequency resource using the first transmission format, the data to be sent being data to be sent to a network device, the data to be sent further including second data, the second data being sent to the network device by the first terminal. The first determination unit 710 is further configured to determine a third time frequency resource and a third transmission format when the receiving unit acquires the first data. The sending unit 730 is configured to send the first data to the network device over the third time frequency resource using the third transmission format.

Alternatively, the third time frequency resource is the same as a time frequency resource over which the first terminal sends the second data to the network device.

Alternatively, the receiving unit 720 is further configured to receive at least one of first information or third information sent by the network device, the first information including at least one of the first time frequency resource or the first transmission format, the third information including at least one of the third time frequency resource or the third transmission format.

Alternatively, the first information and the third information are carried in the same message; or, the first information and the third information are carried in different messages, at least one message in the different messages being configured to indicate an association relationship between the first information and the third information.

Alternatively, as shown in FIG. 7, the terminal 700 further includes a second determination unit 740. The receiving unit 720 is further configured to receive a second SRS sent by the first terminal. The second determination unit 740 is further configured to determine second CSI based on the second SRS, the second CSI being configured to indicate state information of a channel for data transmission from the first terminal to the second terminal. The receiving unit 720 is further configured to receive a second CSI request sent by the network device. The sending unit 730 is further configured to send second CSI to the network device.

Alternatively, the receiving unit 720 is further configured to receive a third SRS request sent by the network device; and the sending unit 730 is further configured to send a third SRS to the network device.

Alternatively, the sending unit 730 is further configured to send, when the receiving unit fails to acquire the first data, UL feedback information to the network device for indicating that the second terminal fails to acquire the first data; and send, when the receiving unit 720 fails to acquire the first data, other UL data to the network device using the third time frequency resource and the third transmission format.

Alternatively, the first transmission format includes an MCS of one or more TBs, a pre-coding vector, an RV, and indication information for transmitting new data or retransmitting data. The third transmission format includes an MCS of one or more TBs, a pre-coding vector, an RV, and indication information for transmitting new data or retransmitting data.

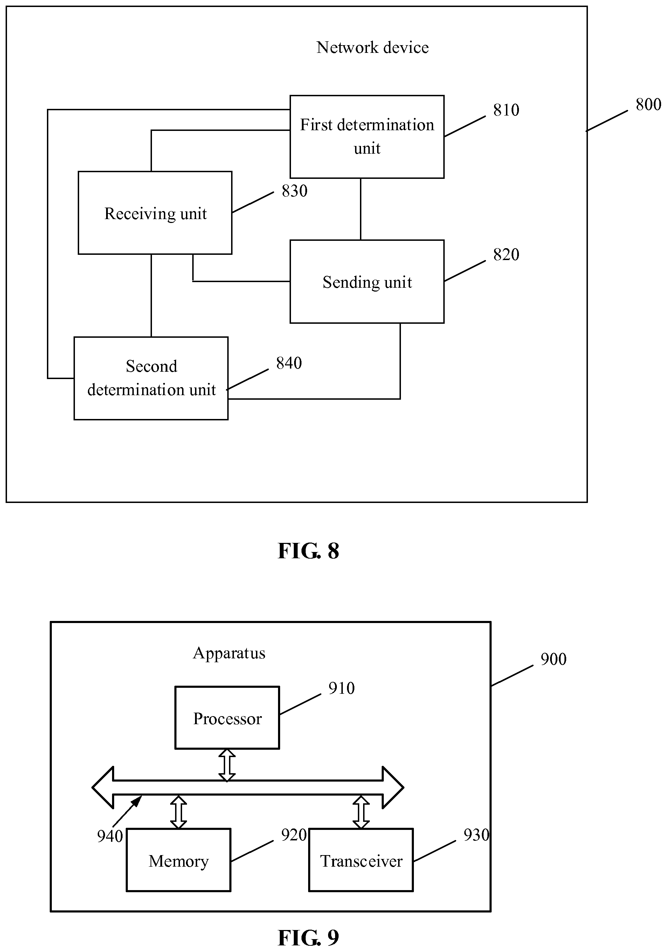

FIG. 8 is a schematic block diagram of a network device 800 according to an embodiment of the present application. As shown in FIG. 8, the network device 800 includes a first determination unit 810 and a sending unit 820. The first determination unit 810 is configured to determine at least one of first information, second information or third information, the first information including at least one of a first time frequency resource or a first transmission format, the first time frequency resource and the first transmission format being configured for a first terminal to send first data in data to be sent to a second terminal, the data to be sent being data to be sent to the network device, the second information including at least one of a second time frequency resource or a second transmission format, the second time frequency resource and the second transmission format being configured for the first terminal to send second data in the data to be sent to the network device, the third information including at least one of a third time frequency resource or a third transmission format, the third time frequency resource and the third transmission format being configured for the second terminal to send the first data to the network device. The sending unit 820 is configured to send the at least one information.

Alternatively, the second time frequency resource and the third time frequency resource are the same time frequency resource.

Alternatively, when the at least one information includes the first information and the second information, the sending unit 820 is configured to: send the first information and the second information, carried in the same message, to the first terminal; or, send the first information and the second information, carried in different messages, to the first terminal, at least one message in the different messages being configured to indicate an association relationship between the first information and the second information.

Alternatively, when the at least one information includes the first information and the third information, the sending unit 820 is configured to: send the first information and the third information, carried in the same message, to the second terminal; or, send the first information and the third information, carried in different messages, to the second terminal, at least one message in the different messages being configured to indicate an association relationship between the first information and the third information.

Alternatively, the network device 800 further includes a receiving unit 830 and a second determination unit 840. The receiving unit 830 is configured to receive a notification message sent by the first terminal, the notification message including an identifier of at least one terminal, the at least one terminal being a terminal directly communicating with the first terminal. The second determination unit 840 is configured to determine the second terminal from the at least one terminal.

Alternatively, the notification message further includes capability information of the at least one terminal.

Alternatively, the capability information includes at least one of a transmission bandwidth and an antenna quantity.

Alternatively, the receiving unit 830 is specifically configured to receive the notification message periodically sent by the first terminal.

Alternatively, the second determination unit 840 is specifically configured to: determine the second terminal based on at least one of first CSI, second CSI, third CSI and capability information of at least one terminal, wherein the first CSI is state information of a UL channel between the first terminal and the network device, the second CSI is state information of a channel for data transmission between the first terminal and a terminal in at least one terminal, and the third CSI is state information of a UL channel between the terminal in the at least one terminal and the network device.

Alternatively, the first determination unit 810 is specifically configured to determine the first information, the second information and the third information based on first CSI, second CSI corresponding to the second terminal and third CSI corresponding to the second terminal, or based on first CSI, second CSI corresponding to the second terminal, third CSI corresponding to the second terminal and capability information of the second terminal. The first CSI is state information of a UL channel between the first terminal and the network device, the second CSI corresponding to the second terminal is state information of a channel for data transmission from the first terminal to the second terminal, and the third CSI corresponding to the second terminal is state information of a UL channel between the second terminal and the network device.

Alternatively, the network device 800 further includes a receiving unit 830. The sending unit 820 is further configured to send a first SRS request to the first terminal. The receiving unit 830 is configured to receive a first SRS sent by the first terminal. The first determination unit 810 is further configured to acquire first CSI based on the first SRS, the first CSI being state information of a UL channel between the first terminal and the network device.

Alternatively, the first SRS request is configured for requesting the first terminal to send the first SRS at first time, the first time including at least one sending time point.

Alternatively, the network device further includes a receiving unit 830. The sending unit 820 is further configured to send a CSI request to at least one terminal, the at least one terminal being a terminal directly communicating with the first terminal. The receiving unit 830 is configured to receive second CSI sent by each of the at least one terminal, the second CSI being state information of a channel for data transmission from the first terminal to the terminal in the at least one terminal.

Alternatively, the network device 800 further includes a receiving unit 830. The sending unit is further configured to send a third SRS request to at least one terminal, the at least one terminal being a terminal directly communicating with the first terminal. The receiving unit is configured to receive a third SRS sent by each of the at least one terminal. The first determination unit is configured to acquire third CSI based on the third SRS, the third CSI being state information of a UL channel between the terminal in the at least one terminal and the network device.

Alternatively, the third SRS request is configured for requesting the at least one terminal to send the third SRS at first time, the first time including at least one sending time point.

Alternatively, the first transmission format includes an MCS of one or more TBs, a pre-coding vector, an RV, and indication information for transmitting new data or retransmitting data; the second transmission format includes an MCS of one or more TBs, a pre-coding vector, an RV, and indication information for transmitting new data or retransmitting data; and the third transmission format includes an MCS of one or more TBs, a pre-coding vector, an RV, and indication information for transmitting new data or retransmitting data.

FIG. 9 is a schematic block diagram of an apparatus 900 according to an embodiment of the present application. The apparatus 900 includes a processor 910, a memory 920 and a transceiver 930. The memory 920 is configured to store a program instruction. The processor 910 may call the program instruction stored in the memory 920. The transceiver 930 is configured for external communication. Alternatively, the apparatus 900 further includes a bus system 940 for interconnecting the processor 910, the memory 920 and the transceiver 930.

Alternatively, the apparatus 900 may correspond to the first terminal in the foregoing method embodiment to implement corresponding functions of the first terminal. Or, the apparatus 900 may correspond to the second terminal in the foregoing method embodiment to implement corresponding functions of the second terminal. Or, the apparatus 900 may correspond to the network device in the foregoing method embodiment to implement corresponding functions of the network device.

Hereinafter, the apparatus 900 will be first described as an example of a first terminal.

Specifically, the processor 910 is configured to call the instruction stored in the memory 920 to perform the following operations of determining a first time frequency resource, a first transmission format, a second time frequency resource, and a second transmission format; sending, by means of the transceiver 930, first data in data to be sent to a second terminal over the first time frequency resource using the first transmission format, in order for the second terminal to send the first data to a network device, the data to be sent being data to be sent to the network device; and sending, by means of the transceiver 930, second data in the data to be sent to the network device over the second time frequency resource using the second transmission format.

Alternatively, the second time frequency resource is the same as a time frequency resource over which the second terminal sends the first data to the network device.

Alternatively, the processor 910 is configured to call the instruction stored in the memory 920 to perform the following operations of receiving, by means of the transceiver 930, at least one of first information or second information sent by the network device before determining a first time frequency resource, a first transmission format, a second time frequency resource, and a second transmission format, the first information including at least one of the first time frequency resource or the first transmission format, the second information including at least one of the second time frequency resource or the second transmission format.

Alternatively, the first information and the second information are carried in the same message; or, the first information and the second information are carried in different messages, at least one message in the different messages being configured to indicate an association relationship between the first information and the second information.

Alternatively, the processor 910 is configured to call the instruction stored in the memory 920 to perform the following operation of sending, by means of the transceiver 930, a notification message to the network device before receiving, by means of the transceiver 930, at least one of first information or second information sent by the network device, the notification message including an identifier of at least one terminal, the at least one terminal being a terminal directly communicating with the first terminal.

Alternatively, the notification message further includes capability information of the at least one terminal.

Alternatively, the capability information includes at least one of a transmission bandwidth or an antenna quantity.

Alternatively, the processor 910 is configured to call the instruction stored in the memory 920 to perform the following operation of periodically sending, by means of the transceiver 930, the notification message to the network device.

Alternatively, the processor 910 is configured to call the instruction stored in the memory 920 to perform the following operations of receiving, by means of the transceiver 930, a first SRS request sent by the network device before receiving, by the transceiver 930, at least one of first information or second information sent by the network device; and sending, by means of the transceiver 930, a first SRS to the network device.

Alternatively, the processor 910 is configured to call the instruction stored in the memory 920 to perform the following operation of periodically sending, by means of the transceiver 930, a second SRS to at least one terminal before determining a first time frequency resource, a first transmission format, a second time frequency resource, and a second transmission format, the at least one terminal being a terminal directly communicating with the first terminal.

Alternatively, the first transmission format includes an MCS of one or more TBs, a pre-coding vector, an RV, and indication information for transmitting new data or retransmitting data; and the second transmission format includes an MCS of one or more TBs, a pre-coding vector, an RV, and indication information for transmitting new data or retransmitting data.

Hereinafter, the apparatus 900 will be described as an example of a second terminal.

Specifically, the processor 910 is configured to call the instruction stored in the memory 920 to perform the following operations of determining a first time frequency resource and a first transmission format; acquiring, by means of the transceiver 930, first data in data to be sent from a first terminal over the first time frequency resource using the first transmission format, the data to be sent being data to be sent to a network device, the data to be sent further including second data, the second data being sent to the network device by the first terminal; determining a third time frequency resource and a third transmission format when the first data is acquired; and sending, by means of the transceiver 930, the first data to the network device over the third time frequency resource using the third transmission format.

Alternatively, the third time frequency resource is the same as a time frequency resource over which the first terminal sends the second data to the network device.

Alternatively, the processor 910 is configured to call the instruction stored in the memory 920 to perform the following operations of receiving, by means of the transceiver 930, at least one of first information or third information sent by the network device before determining a first time frequency resource and a first transmission format, the first information including at least one of the first time frequency resource or the first transmission format, the third information including at least one of the third time frequency resource or the third transmission format.

Alternatively, the first information and the third information are carried in the same message; or, the first information and the third information are carried in different messages, at least one message in the different messages being configured to indicate an association relationship between the first information and the third information.

Alternatively, the processor 910 is configured to call the instruction stored in the memory 920 to perform the following operations of receiving, by the transceiver 930, a second SRS sent by the first terminal before receiving, by the transceiver 930, at least one of first information or third information sent by the network device; determining second CSI based on the second SRS, the second CSI being configured to indicate state information of a channel for data transmission from the first terminal to the second terminal; receiving, by the transceiver 930, a second CSI request sent by the network device; and sending, by the transceiver 930, second CSI to the network device.

Alternatively, the processor 910 is configured to call the instruction stored in the memory 920 to perform the following operations of receiving, by the transceiver 930, a third SRS request sent by the network device before receiving, by the transceiver 930, at least one of first information or third information sent by the network device; and sending, by the transceiver 930, a third SRS to the network device.

Alternatively, the processor 910 is configured to call the instruction stored in the memory 920 to perform the following operations of, when the first data is not acquired, sending, by the transceiver 930, UL feedback information to the network device for indicating that the second terminal fails to acquire the first data; and when the first data is not acquired, sending, by the transceiver 930, other UL data to the network device using the third time frequency resource and the third transmission format.

Alternatively, the first transmission format includes an MCS of one or more TBs, a pre-coding vector, an RV, and indication information for transmitting new data or retransmitting data; and the third transmission format includes an MCS of one or more TBs, a pre-coding vector, an RV, and indication information for transmitting new data or retransmitting data.

Hereinafter, the apparatus 900 will be described as an example of a network device.

Specifically, the processor 910 is configured to call the instruction stored in the memory 920 to perform the following operations of determining at least one of first information, second information or third information, the first information including at least one of a first time frequency resource or a first transmission format, the first time frequency resource and the first transmission format being configured for a first terminal to send first data in data to be sent to a second terminal, the data to be sent being data to be sent to the network device, the second information including at least one of a second time frequency resource or a second transmission format, the second time frequency resource and the second transmission format being configured for the first terminal to send second data in the data to be sent to the network device, the third information including at least one of a third time frequency resource or a third transmission format, the third time frequency resource and the third transmission format being configured for the second terminal to send the first data to the network device; and sending, by the transceiver 930, the at least one information.

Alternatively, the second time frequency resource and the third time frequency resource are the same time frequency resource.

Alternatively, the processor 910 is configured to call the instruction stored in the memory 920 to perform the following operations of, when the at least one information includes the first information and the second information, sending, by the transceiver 930, the first information and the second information, carried in the same message, to the first terminal; or, sending the first information and the second information, carried in different messages, to the first terminal, at least one message in the different messages being configured to indicate an association relationship between the first information and the second information.

Alternatively, the processor 910 is configured to call the instruction stored in the memory 920 to perform the following operations of, when the at least one information includes the first information and the third information, sending, by the transceiver 930, the first information and the third information, carried in the same message, to the first terminal; or, sending, by the transceiver 930, the first information and the third information, carried in different messages, to the first terminal, at least one message in the different messages being configured to indicate an association relationship between the first information and the second information.

Alternatively, the processor 910 is configured to call the instruction stored in the memory 920 to perform the following operations of receiving, by the transceiver 930, a notification message sent by the first terminal before determining at least one of first information, second information or third information, the notification message including an identifier of at least one terminal, the at least one terminal being a terminal directly communicating with the first terminal; and determining, by the network device, the second terminal from the at least one terminal.

Alternatively, the notification message further includes capability information of the at least one terminal.

Alternatively, the capability information includes at least one of a transmission bandwidth and an antenna quantity.

Alternatively, the processor 910 is configured to call the instruction stored in the memory 920 to perform the following operation of receiving, by the transceiver 930, the notification message periodically sent by the first terminal.

Alternatively, the processor 910 is configured to call the instruction stored in the memory 920 to perform the following operation of determining the second terminal based on at least one of first CSI, second CSI, third CSI and capability information of at least one terminal. The first CSI is state information of a UL channel between the first terminal and the network device, the second CSI is state information of a channel for data transmission between the first terminal and a terminal in at least one terminal, and the third CSI is state information of a UL channel between the terminal in the at least one terminal and the network device.

Alternatively, the processor 910 is configured to call the instruction stored in the memory 920 to perform the following operation of determining the first information, the second information and the third information based on first CSI, second CSI corresponding to the second terminal and third CSI corresponding to the second terminal, or based on first CSI, second CSI corresponding to the second terminal, third CSI corresponding to the second terminal and capability information of the second terminal. The first CSI is state information of a UL channel between the first terminal and the network device, the second CSI corresponding to the second terminal is state information of a channel for data transmission from the first terminal to the second terminal, and the third CSI corresponding to the second terminal is state information of a UL channel between the second terminal and the network device.

Alternatively, the processor 910 is configured to call the instruction stored in the memory 920 to perform the following operations of sending, by the transceiver 930, a first SRS request to the first terminal before determining at least one of first information, second information or third information; receiving, by the transceiver 930, a first SRS sent by the first terminal; and acquiring first CSI based on the first SRS, the first CSI being state information of a UL channel between the first terminal and the network device.

Alternatively, the first SRS request is configured for requesting the first terminal to send the first SRS at first time, the first time including at least one sending time point.

Alternatively, the processor 910 is configured to call the instruction stored in the memory 920 to perform the following operations of sending, by the transceiver 930, a CSI request to at least one terminal before determining at least one of first information, second information or third information, the at least one terminal being a terminal directly communicating with the first terminal; and receiving, by the transceiver 930, second CSI sent by each of the at least one terminal, the second CSI being state information of a channel for data transmission from the first terminal to the terminal in the at least one terminal.

Alternatively, the processor 910 is configured to call the instruction stored in the memory 920 to perform the following operations of sending, by the transceiver 930, a third SRS request to at least one terminal before determining at least one of first information, second information or third information, the at least one terminal being a terminal directly communicating with the first terminal; receiving, by the transceiver 930, a third SRS sent by each terminal in the at least one terminal; and acquiring third CSI based on the third SRS, the third CSI being state information of a UL channel between the terminal in the at least one terminal and the network device.

Alternatively, the third SRS request is configured for requesting the at least one terminal to send the third SRS at first time, the first time including at least one sending time point.

Alternatively, the first transmission format includes an MCS of one or more TBs, a pre-coding vector, an RV, and indication information for transmitting new data or retransmitting data; the second transmission format includes an MCS of one or more TBs, a pre-coding vector, an RV, and indication information for transmitting new data or retransmitting data; and the third transmission format includes an MCS of one or more TBs, a pre-coding vector, an RV, and indication information for transmitting new data or retransmitting data.

Those of ordinary skill in the art will appreciate that the units and algorithm steps of various examples described in conjunction with the embodiments disclosed herein can be implemented in electronic hardware or a combination of computer software and electronic hardware. Whether these functions are performed in hardware or software depends on the specific application and design constraints of the technical solution. A person skilled in the art can use different methods for implementing the described functions for each particular application, but such implementation should not be considered to be beyond the scope of the present application.

A person skilled in the art can clearly understand that for the convenience and brevity of the description, the specific working process of the system, the apparatus and the unit described above can refer to the corresponding process in the foregoing method embodiment, and details are not described herein again.

In the several embodiments provided by the present application, it should be understood that the disclosed systems, apparatuses, and methods may be implemented in other manners. For example, the apparatus embodiments described above are merely illustrative. For example, the division of the unit is only a logical function division. In actual implementation, there may be another division manner, for example, multiple units or components may be combined or integrated into another system, or some features may be ignored or not executed. In addition, the coupling or direct coupling or communication connection shown or discussed may be an indirect coupling or communication connection through some interfaces, apparatuses or units, and may be electrical, mechanical or otherwise.

The units described as separate components may or may not be physically separated, and the components displayed as units may or may not be physical units, that is, may be located in one place, or may be distributed to multiple network units. Some or all of the units may be selected according to actual needs to achieve the purpose of the solution of the present embodiment.

In addition, each functional unit in each embodiment of the present application may be integrated into one processing unit, or each unit may exist physically separately, or two or more units may be integrated into one unit.

The functions may be stored in a computer-readable storage medium if being implemented in the form of a software functional unit and sold or configured as a standalone product. Based on such understanding, the technical solution of the present application, which is essential to the prior art or part of the technical solution, may be embodied in the form of a software product stored in a storage medium, including a plurality of instructions configured to cause a computer device (which may be a personal computer, server, or network device, etc.) to perform all or part of the steps of the methods described in various embodiments of the present application. The foregoing storage medium includes: a U disk, a mobile hard disk, a Read-Only Memory (ROM), a Random Access Memory (RAM), a magnetic disk, or an optical disk, or the like, which may store a program code.

The foregoing is only a specific implementation manner of the present application, but the scope of protection of the present application is not limited thereto. Any person skilled in the art can easily think of changes or replacements within the technical scope disclosed in the present application, which should be covered by the scope of protection of the present application. Therefore, the scope of protection of the present application should be determined by the scope of the claims.

## Claims

1. A data transmission method, comprising:
determining, by a first terminal, a first time frequency resource, a first transmission format, a second time frequency resource, and a second transmission format;
sending, by the first terminal, first data in data to be sent to a second terminal over the first time frequency resource using the first transmission format, in order for the second terminal to send the first data to a network device, the data to be sent being data to be sent to the network device; and
sending, by the first terminal, second data in the data to be sent to the network device over the second time frequency resource using the second transmission format.

2. The method according to claim 1, wherein the second time frequency resource is the same as a time frequency resource over which the second terminal sends the first data to the network device.

3. The method according to claim 1 or 2, before determining, by the first terminal, the first time frequency resource, the first transmission format, the second time frequency resource, and the second transmission format, the method further comprising:
receiving, by the first terminal, at least one of first information or second information sent by the network device,
wherein the first information comprises at least one of the first time frequency resource or the first transmission format and the second information comprises at least one of the second time frequency resource or the second transmission format.

4. The method according to claim 3, wherein the first information and the second information are carried in the same message; or,
the first information and the second information are carried in different messages, at least one message in the different messages being configured to indicate an association relationship between the first information and the second information.

5. The method according to claim 3 or 4, before receiving at least one of first information or second information sent by the network device, the method further comprising:
sending, by the first terminal, a notification message to the network device, the notification message comprising an identifier of at least one terminal, the at least one terminal being a terminal directly communicating with the first terminal.

6. The method according to claim 5, wherein the notification message further comprises capability information of the at least one terminal.

7. The method according to claim 6, wherein the capability information comprises at least one of a transmission bandwidth or an antenna quantity.

8. The method according to any one of claims 5 to 7, wherein sending, by the first terminal, the notification message to the network device comprises:
periodically sending, by the first terminal, the notification message to the network device.

9. The method according to any one of claims 3 to 8, before receiving at least one of first information or second information sent by the network device, the method further comprising:
receiving, by the first terminal, a first Sounding Reference Signal, SRS, request sent by the network device; and
sending, by the first terminal, a first SRS to the network device.

10. The method according to any one of claims 1 to 9, before determining, by the first terminal, the first time frequency resource, the first transmission format, the second time frequency resource, and the second transmission format, the method further comprising:
periodically sending, by the first terminal, a second SRS to at least one terminal, the at least one terminal being a terminal directly communicating with the first terminal.

11. The method according to any one of claims 1 to 10, wherein the first transmission format comprises a Modulation and Coding Scheme, MCS, of one or more Transport Blocks, TBs, a pre-coding vector, a Redundancy Version, RV, and indication information for transmitting new data or retransmitting data; and the second transmission format comprises an MCS of one or more TBs, a pre-coding vector, an RV, and indication information for transmitting new data or retransmitting data.

12. A data transmission method, comprising:
determining, by a second terminal, a first time frequency resource and a first transmission format;
acquiring, by the second terminal, first data in data to be sent from a first terminal over the first time frequency resource using the first transmission format, the data to be sent being data to be sent to a network device, the data to be sent further comprising second data, the second data being sent to the network device by the first terminal;
determining, by the second terminal, a third time frequency resource and a third transmission format when acquiring the first data; and
sending, by the second terminal, the first data to the network device over the third time frequency resource using the third transmission format.

13. The method according to claim 12, wherein the third time frequency resource is the same as a time frequency resource over which the first terminal sends the second data to the network device.

14. The method according to claim 12 or 13, before determining, by the second terminal, the first time frequency resource and the first transmission format, the method further comprising:
receiving, by the second terminal, at least one of first information or third information sent by the network device,
wherein the first information comprises at least one of the first time frequency resource or the first transmission format, and the third information comprises at least one of the third time frequency resource or the third transmission format.

15. The method according to claim 14, wherein the first information and the third information are carried in the same message; or,
the first information and the third information are carried in different messages, at least one message in the different messages being configured to indicate an association relationship between the first information and the third information.

16. The method according to claim 14 or 15, before receiving at least one of first information or third information sent by the network device, the method further comprising:
receiving, by the second terminal, a second Sounding Reference Signal, SRS, sent by the first terminal;
determining, by the second terminal, second Channel State Information, CSI, based on the second SRS, the second CSI being configured to indicate state information of a channel for data transmission from the first terminal to the second terminal;
receiving, by the second terminal, a second CSI request sent by the network device; and
sending, by the second terminal, the second CSI to the network device.

17. The method according to any one of claims 14 to 16, before receiving at least one of first information or third information sent by the network device, the method further comprising:
receiving, by the second terminal, a third SRS request sent by the network device; and
sending, by the second terminal, a third SRS to the network device.

18. The method according to any one of claims 14 to 17, further comprising:
when the first data is not acquired, sending, by the second terminal, Uplink, UL feedback information to the network device for indicating that the second terminal fails to acquire the first data; and
when the first data is not acquired, sending, by the second terminal, other UL data to the network device using the third time frequency resource and the third transmission format.

19. The method according to any one of claims 12 to 18, wherein the first transmission format comprises a Modulation and Coding Scheme, MCS, of one or more Transport Blocks, TBs, a pre-coding vector, a Redundancy Version, RV, and indication information for transmitting new data or retransmitting data; and the third transmission format comprises an MCS of one or more TBs, a pre-coding vector, an RV, and indication information for transmitting new data or retransmitting data.

20. A data transmission method, comprising:
determining, by a network device, at least one of first information, second information or third information,
the first information comprising at least one of a first time frequency resource or a first transmission format, the first time frequency resource and the first transmission format being configured for a first terminal to send first data in data to be sent to a second terminal, the data to be sent being data to be sent to the network device, the second information comprising at least one of a second time frequency resource or a second transmission format, the second time frequency resource and the second transmission format being configured for the first terminal to send second data in the data to be sent to the network device, the third information comprising at least one of a third time frequency resource or a third transmission format, the third time frequency resource and the third transmission format being configured for the second terminal to send the first data to the network device; and
sending, by the network device, the at least one information.

21. The method according to claim 20, wherein the second time frequency resource and the third time frequency resource are the same time frequency resource.

22. The method according to claim 20 or 21, wherein when the at least one information comprises the first information and the second information, sending, by the network device, the at least one information comprises:
sending, by the network device, the first information and the second information, carried in the same message, to the first terminal; or,
sending, by the network device, the first information and the second information, carried in different messages, to the first terminal, at least one message in the different messages being configured to indicate an association relationship between the first information and the second information.

23. The method according to claim 20 or 21, wherein when the at least one information comprises the first information and the third information, sending, by the network device, the at least one information comprises:
sending, by the network device, the first information and the third information, carried in the same message, to the second terminal; or,
sending, by the network device, the first information and the third information, carried in different messages, to the second terminal, at least one message in the different messages being configured to indicate an association relationship between the first information and the third information.

24. The method according to any one of claims 20 to 23, before determining at least one of first information, second information and third information, the method further comprising:
receiving, by the network device, a notification message sent by the first terminal, the notification message comprising an identifier of at least one terminal, the at least one terminal being a terminal directly communicating with the first terminal; and
determining, by the network device, the second terminal from the at least one terminal.

25. The method according to claim 24, wherein the notification message further comprises capability information of the at least one terminal.

26. The method according to claim 25, wherein the capability information comprises at least one of a transmission bandwidth or an antenna quantity.

27. The method according to any one of claims 24 to 26, wherein receiving, by the network device, the notification message sent by the first terminal comprises:
receiving, by the network device, the notification message periodically sent by the first terminal.

28. The method according to any one of claims 24 to 27, wherein determining, by the network device, the second terminal from the at least one terminal comprises:
determining the second terminal based on at least one of first Channel State Information, CSI, second CSI, third CSI or capability information of at least one terminal,
wherein the first CSI is state information of an Uplink, UL, channel between the first terminal and the network device, the second CSI is state information of a channel for data transmission between the first terminal and a terminal in at least one terminal, and the third CSI is state information of a UL channel between the terminal in the at least one terminal and the network device.

29. The method according to any one of claims 20 to 28, wherein determining at least one of first information, second information or third information comprises:
determining the first information, the second information and the third information based on first CSI, second CSI corresponding to the second terminal and third CSI corresponding to the second terminal, or based on first CSI, second CSI corresponding to the second terminal, third CSI corresponding to the second terminal and capability information of the second terminal,
wherein the first CSI is state information of a UL channel between the first terminal and the network device, the second CSI corresponding to the second terminal is state information of a channel for data transmission from the first terminal to the second terminal, and the third CSI corresponding to the second terminal is state information of a UL channel between the second terminal and the network device.

30. The method according to any one of claims 20 to 29, before determining at least one of first information, second information or third information, the method further comprising:
sending, by the network device, a first Sounding Reference Signal, SRS, request to the first terminal;
receiving, by the network device, a first SRS sent by the first terminal; and
acquiring, by the network device, first CSI based on the first SRS, the first CSI being state information of a UL channel between the first terminal and the network device.

31. The method according to claim 30, wherein the first SRS request is configured for requesting the first terminal to send the first SRS at first time, the first time comprising at least one sending time point.

32. The method according to any one of claims 20 to 31, before determining at least one of first information, second information or third information, the method further comprising:
sending, by the network device, a CSI request to at least one terminal, the at least one terminal being a terminal directly communicating with the first terminal; and
receiving, by the network device, second CSI sent by each of the at least one terminal, the second CSI being state information of a channel for data transmission from the first terminal to the terminal in the at least one terminal.

33. The method according to any one of claims 20 to 32, before determining at least one of first information, second information or third information, the method further comprising:
sending, by the network device, a third SRS request to at least one terminal, the at least one terminal being a terminal directly communicating with the first terminal;
receiving, by the network device, a third SRS sent by each of the at least one terminal; and
acquiring, by the network device, third CSI based on the third SRS, the third CSI being state information of a UL channel between the terminal in the at least one terminal and the network device.

34. The method according to claim 33, wherein the third SRS request is configured for requesting the at least one terminal to send the third SRS at first time, the first time comprising at least one sending time point.

35. The method according to any one of claims 20 to 34, wherein the first transmission format comprises a Modulation and Coding Scheme, MCS, of one or more Transport Blocks, TBs, a pre-coding vector, a Redundancy Version, RV, and indication information for transmitting new data or retransmitting data; the second transmission format comprises an MCS of one or more TBs, a pre-coding vector, an RV, and indication information for transmitting new data or retransmitting data; and the third transmission format comprises an MCS of one or more TBs, a pre-coding vector, an RV, and indication information for transmitting new data or retransmitting data.

36. A terminal, the terminal being a first terminal, the terminal comprising a determination unit and a sending unit, wherein
the determination unit is configured to determine a first time frequency resource, a first transmission format, a second time frequency resource, and a second transmission format;
the sending unit is configured to send first data in data to be sent to a second terminal over the first time frequency resource using the first transmission format, in order for the second terminal to send the first data to a network device, the data to be sent being data to be sent to the network device; and
the sending unit is further configured to send second data in the data to be sent to the network device over the second time frequency resource using the second transmission format.

37. The terminal according to claim 36, wherein the second time frequency resource is the same as a time frequency resource over which the second terminal sends the first data to the network device.

38. The terminal according to claim 36 or 37, further comprising: a receiving unit, wherein
the receiving unit is configured to receive at least one of first information or second information sent by the network device,
the first information comprising at least one of the first time frequency resource or the first transmission format, and the second information comprising at least one of the second time frequency resource or the second transmission format.

39. The terminal according to claim 38, wherein the first information and the second information are carried in the same message; or,
the first information and the second information are carried in different messages, at least one message in the different messages being configured to indicate an association relationship between the first information and the second information.

40. The terminal according to claim 38 or 39, wherein the sending unit is further configured to:
send a notification message to the network device, the notification message comprising an identifier of at least one terminal, the at least one terminal being a terminal directly communicating with the first terminal.

41. The terminal according to claim 40, wherein the notification message further comprises capability information of the at least one terminal.

42. The terminal according to claim 41, wherein the capability information comprises at least one of a transmission bandwidth or an antenna quantity.

43. The terminal according to any one of claims 40 to 42, wherein the sending unit is further configured to:
periodically send the notification message to the network device.

44. The terminal according to any one of claims 38 to 43, further comprising: a receiving unit, wherein
the receiving unit is configured to receive a first Sounding Reference Signal, SRS, request sent by the network device; and
the sending unit is further configured to send a first SRS to the network device.

45. The terminal according to any one of claims 36 to 44, wherein
the sending unit is further configured to periodically send a second SRS to at least one terminal, the at least one terminal being a terminal directly communicating with the first terminal.

46. The terminal according to any one of claims 36 to 45, wherein the first transmission format comprises a Modulation and Coding Scheme, MCS, of one or more Transport Blocks, TBs, a pre-coding vector, a Redundancy Version, RV, and indication information for transmitting new data or retransmitting data; and the second transmission format comprises an MCS of one or more TBs, a pre-coding vector, an RV, and indication information for transmitting new data or retransmitting data.

47. A terminal, the terminal being a second terminal, the terminal comprising a first determination unit, a receiving unit and a sending unit, wherein
the first determination unit is configured to determine a first time frequency resource and a first transmission format;
the receiving unit is configured to acquire first data in data to be sent from a first terminal over the first time frequency resource using the first transmission format, the data to be sent being data to be sent to a network device, the data to be sent further comprising second data, the second data being sent to the network device by the first terminal;
the first determination unit is further configured to determine a third time frequency resource and a third transmission format when the receiving unit acquires the first data; and
the sending unit is configured to send the first data to the network device over the third time frequency resource using the third transmission format.

48. The terminal according to claim 47, wherein the third time frequency resource is the same as a time frequency resource over which the first terminal sends the second data to the network device.

49. The terminal according to claim 47 or 48, wherein the receiving unit is further configured to:
receive at least one of first information or third information sent by the network device,
the first information comprising at least one of the first time frequency resource or the first transmission format, and the third information comprising at least one of the third time frequency resource or the third transmission format.

50. The terminal according to claim 49, wherein the first information and the third information are carried in the same message; or,
the first information and the third information are carried in different messages, at least one message in the different messages being configured to indicate an association relationship between the first information and the third information.

51. The terminal according to claim 49 or 50, further comprising: a second determination unit, wherein
the receiving unit is further configured to receive a second Sounding Reference Signal, SRS, sent by the first terminal;
the second determination unit is further configured to determine second Channel State Information, CSI, based on the second SRS, the second CSI being configured to indicate state information of a channel for data transmission from the first terminal to the second terminal;
the receiving unit is further configured to receive a second CSI request sent by the network device; and
the sending unit is further configured to send second CSI to the network device.

52. The terminal according to any one of claims 49 to 51, wherein
the receiving unit is further configured to receive a third SRS request sent by the network device; and
the sending unit is further configured to send a third SRS to the network device.

53. The terminal according to any one of claims 49 to 52, wherein
the sending unit is further configured to: send, when the receiving unit fails to acquire the first data, Uplink, UL, feedback information to the network device for indicating that the second terminal fails to acquire the first data; and
send, when the receiving unit fails to acquire the first data, other UL data to the network device using the third time frequency resource and the third transmission format.

54. The terminal according to any one of claims 47 to 53, wherein the first transmission format comprises a Modulation and Coding Scheme, MCS, of one or more Transport Blocks, TBs, a pre-coding vector, a Redundancy Version, RV, and indication information for transmitting new data or retransmitting data; and the third transmission format comprises an MCS of one or more TBs, a pre-coding vector, an RV, and indication information for transmitting new data or retransmitting data.

55. A network device, comprising a first determination unit and a sending unit, wherein
the first determination unit is configured to determine at least one of first information, second information or third information,
the first information comprising at least one of a first time frequency resource or a first transmission format, the first time frequency resource and the first transmission format being configured for a first terminal to send first data in data to be sent to a second terminal, the data to be sent being data to be sent to the network device, the second information comprising at least one of a second time frequency resource or a second transmission format, the second time frequency resource and the second transmission format being configured for the first terminal to send second data in the data to be sent to the network device, the third information comprising at least one of a third time frequency resource or a third transmission format, the third time frequency resource and the third transmission format being configured for the second terminal to send the first data to the network device; and
the sending unit is configured to send the at least one information.

56. The network device according to claim 55, wherein the second time frequency resource and the third time frequency resource are the same time frequency resource.

57. The network device according to claim 55 or 56, wherein when the at least one information comprises the first information and the second information, the sending unit is configured to:
send the first information and the second information, carried in the same message, to the first terminal; or,
send the first information and the second information, carried in different messages, to the first terminal, at least one message in the different messages being configured to indicate an association relationship between the first information and the second information.

58. The network device according to claim 55 or 56, wherein when the at least one information comprises the first information and the third information, the sending unit is configured to:
send the first information and the third information, carried in the same message, to the second terminal; or,
send the first information and the third information, carried in different messages, to the second terminal, at least one message in the different messages being configured to indicate an association relationship between the first information and the third information.

59. The network device according to any one of claims 55 to 58, further comprising: a receiving unit and a second determination unit, wherein
the receiving unit is configured to receive a notification message sent by the first terminal, the notification message comprising an identifier of at least one terminal, the at least one terminal being a terminal directly communicating with the first terminal; and
the second determination unit is configured to determine the second terminal from the at least one terminal.

60. The network device according to claim 59, wherein the notification message further comprises capability information of the at least one terminal.

61. The network device according to claim 60, wherein the capability information comprises at least one of a transmission bandwidth or an antenna quantity.

62. The network device according to any one of claims 59 to 61, wherein the receiving unit is specifically configured to receive the notification message periodically sent by the first terminal.

63. The network device according to any one of claims 59 to 62, wherein the second determination unit is specifically configured to:
determine the second terminal based on at least one of first Channel State Information, CSI, second CSI, third CSI or capability information of at least one terminal, wherein
the first CSI is state information of an Uplink, UL, channel between the first terminal and the network device, the second CSI is state information of a channel for data transmission between the first terminal and a terminal in at least one terminal, and the third CSI is state information of a UL channel between the terminal in the at least one terminal and the network device.

64. The network device according to any one of claims 55 to 63, wherein the first determination unit is specifically configured to:
determine the first information, the second information and the third information based on first CSI, second CSI corresponding to the second terminal and third CSI corresponding to the second terminal, or based on first CSI, second CSI corresponding to the second terminal, third CSI corresponding to the second terminal and capability information of the second terminal, wherein
the first CSI is state information of a UL channel between the first terminal and the network device, the second CSI corresponding to the second terminal is state information of a channel for data transmission from the first terminal to the second terminal, and the third CSI corresponding to the second terminal is state information of a UL channel between the second terminal and the network device.

65. The network device according to any one of claims 55 to 64, further comprising: a receiving unit, wherein
the sending unit is further configured to send a first Sounding Reference Signal, SRS, request to the first terminal;
the receiving unit is configured to receive a first SRS sent by the first terminal; and
the first determination unit is further configured to acquire first CSI based on the first SRS, the first CSI being state information of a UL channel between the first terminal and the network device.

66. The network device according to claim 65, wherein the first SRS request is configured for requesting the first terminal to send the first SRS at first time, the first time comprising at least one sending time point.

67. The network device according to any one of claims 55 to 66, further comprising: a receiving unit, wherein
the sending unit is further configured to send a CSI request to at least one terminal, the at least one terminal being a terminal directly communicating with the first terminal; and
the receiving unit is configured to receive second CSI sent by each of the at least one terminal, the second CSI being state information of a channel for data transmission from the first terminal to the terminal in the at least one terminal.

68. The network device according to any one of claims 55 to 67, further comprising: a receiving unit, wherein
the sending unit is further configured to send a third SRS request to at least one terminal, the at least one terminal being a terminal directly communicating with the first terminal;
the receiving unit is configured to receive a third SRS sent by each of the at least one terminal; and
the first determination unit is configured to acquire third CSI based on the third SRS, the third CSI being state information of a UL channel between the terminal in the at least one terminal and the network device.

69. The network device according to claim 68, wherein the third SRS request is configured for requesting the at least one terminal to send the third SRS at first time, the first time comprising at least one sending time point.

70. The network device according to any one of claims 55 to 68, wherein the first transmission format comprises a Modulation and Coding Scheme, MCS, of one or more Transport Blocks, TBs, a pre-coding vector, a Redundancy Version, RV, and indication information for transmitting new data or retransmitting data; the second transmission format comprises an MCS of one or more TBs, a pre-coding vector, an RV, and indication information for transmitting new data or retransmitting data; and the third transmission format comprises an MCS of one or more TBs, a pre-coding vector, an RV, and indication information for transmitting new data or retransmitting data.
